# EUROPEAN PATENT APPLICATION

(11) **EP 1 936 979 A2**
(43) Date of publication of application: **25.06.2008**
(21) Application number: 07118499.8
(22) Date of filing: 15.10.2007
(51) Int. Cl.: H04N 7/16

(54) **Display apparatus having network communicating function and control method thereof**

(30) Priority: 22.12.2006 KR 20060133107
(71) Applicant: Samsung Electronics Co., Ltd., Suwon-si Gyeonggi-do 443-742 (KR)
(72) Inventor: Ryou, Kye-won 306-1403, Jugong Green Ville Apartment,, 446-712, Gyeonggi-do (KR)
(74) Representative: Grootscholten, Johannes A.M.

(57) **Abstract**

A display apparatus having a communication function, and a control method thereof, are provided. A display apparatus includes a communication module which performs communication with an external network, a display module which displays a video received from one of an external device and the communication module, on a display, and a display module control unit which controls the video display operation of the display module, and controls the operation of the communication module according to a current status of the communication module. As a result, the abnormal status of the communication module, and the measure to counteract the abnormality, are displayed, and more convenient, stable, and user-friendly display apparatus can be provided.

## Description

### BACKGROUND OF THE INVENTION

### 1. Field of the Invention

Apparatuses and methods consistent with the present invention relate to a display apparatus having network communicating function and a control method thereof. More particularly, the present invention relates to a display apparatus having network communicating function and a control method thereof, which controls the operation of communicating modules which conduct communications with external network, according to the operational status.

### 2. Description of the Related Art

The advent of electronic technology has introduced a variety of electronic products imbedded with computer systems. For example, a display apparatus has an imbedded computer system, to remove the inconvenience of having to buy a computer system separately.

A communication module has also been introduced, which performs communications with external networks and provides users with web access and simple programs.

However, these display apparatuses do not provide any tool with which a user can check the status of the computer system in the event of emergency, for example, the user cannot determine that the computer system is suddenly down due to an abnormality of the communication module. Therefore, the user can only confirm the abnormality after a predetermined time, when he views the stilled image.

Additionally, all the elements need be rebooted in the display apparatus, in order to reboot the computer system having the error.

### SUMMARY

Exemplary embodiments of the present invention overcome the above disadvantages and other disadvantages not described above. Also, the present invention is not required to overcome the disadvantages described above, and an exemplary embodiment of the present invention may not overcome any of the problems described above. Accordingly, an aspect of the present invention is to provide a display apparatus having a communication function which controls the operation of a communication module conducting communication with an external network such that the communication module is rebooted according to operational status, and a control method thereof.

The foregoing and other aspects are substantially realized by providing a display apparatus, which includes a communication module which performs communication with an external network, a display module which displays a video received, from one of an external device and the communication module, on a display, and a display module control unit which controls the video display operation of the display module, and controls the operation of the communication module according to a current status of the communication module.

The display module control unit determines the current status of the communication module based on an output signal from the communication module, and controls the operation of the communication module based on the determined current status.

The display module control unit causes the communication module to reboot, upon determination that the current status of the communication module indicates one of an erroneous booting, an erroneous communication with the display module control unit, and an erroneous video transmission to the display module.

A communication module power supply unit may be further provided, which supplies power to the communication module, wherein the display module control unit controls the communication module power supply unit to re-supply power to the communication module after a predetermined time of power cutoff, so that the communication module is turned off and subsequently rebooted.

The display module control unit determines whether the communication module indicates the erroneous booting, according to whether an output signal, indicative of whether elements of the communication module operate normally, is changed on a logic level.

The elements of the communication module comprise at least one of a south unit which controls the communication operation of the communication module, a north unit which processes a video according to a signal received from the external network, a communication module control unit which controls the overall operation of the communication module and causes the output signal to be output to the display module, a network connecting unit which is communicatably connected to the external network, and a processing unit which handles data transmission between the above elements.

The display module control unit determines that the communication module has the erroneous communication, if an output signal, received from the communication module at a regular interval, is not received within a first threshold time.

The display module control unit determines that the communication module has the erroneous video transmission, if a video output signal is not received from the communication module within a second threshold time.

A display information generating unit may be provided to the display module and generates display information to be displayed on a video on the display. The display module control unit controls the display information generating unit such that the current status of the communication module is indicated on the display in the form of the display information.

A communication module power supply unit may be further provided, which supplies power to the communication module, wherein the display module control unit controls the communication module power supply unit to supply power to the communication module, in response to a power-on command to the display apparatus.

According to an exemplary embodiment of the present invention, a method is provided for controlling a display apparatus comprising a communication module which performs communication with an external network, and a display module having a display, wherein the method comprises displaying a video received from one of an external device and the communication module on the display, and the display module controlling the operation of the communication module according to a current status of the communication module.

The controlling comprises the display module determining the current status of the communication module based on an output signal from the communication module, and the display module controlling the operation of the communication module based on the determined current status.

The controlling comprises causing the communication module to reboot, upon determination that the current status of the communication module indicates one of an erroneous booting, an erroneous communication with the display module control unit, and an erroneous video transmission to the display module.

The controlling comprises re-supplying power to the communication module after a predetermined time of power cutoff so that the communication module is turned off and subsequently rebooted.

The controlling comprises determining whether the communication module has the erroneous booting, according to whether or not an output signal, indicative of whether elements of the communication module operate normally, is changed on a logic level.

The controlling comprises determining that the communication module has the erroneous communication, if an output signal, received from the communication module at a regular interval, is not received within a first threshold time.

The controlling comprises determining that the communication module has the erroneous video transmission, if a video output signal is not received from the communication module within a second threshold time.

Additionally, the current status of the communication module may be displayed, upon determination that the current status of the communication module indicates an error.

The communication module may transmit a video received from the external network to the display module.

### BRIEF DESCRIPTION OF THE DRAWINGS

The above aspects of the present invention will become more apparent by describing certain exemplary embodiments of the present invention with reference to the accompanying drawings, in which:
FIG. 1 is a block diagram of a display apparatus according to an exemplary embodiment of the present invention;
FIG. 2 is a flowchart illustrating a method for controlling a display apparatus according to an exemplary embodiment of the present invention; and
FIG. 3 is a flowchart illustrating the process of determining an error status of a communication module of FIG. 2 according to an exemplary embodiment of the present invention.

Throughout the drawings, like reference numerals will be understood to refer to like parts, components and structures.

### DETAILED DESCRIPTION OF EXEMPLARY EMBODIMENTS

Exemplary embodiments of the present invention will now be described in detail with reference to the annexed drawings. In the drawings, the same elements are denoted by the same reference numerals throughout the drawings. In the following description, detailed descriptions of known functions and configurations incorporated herein have been omitted for conciseness and clarity.

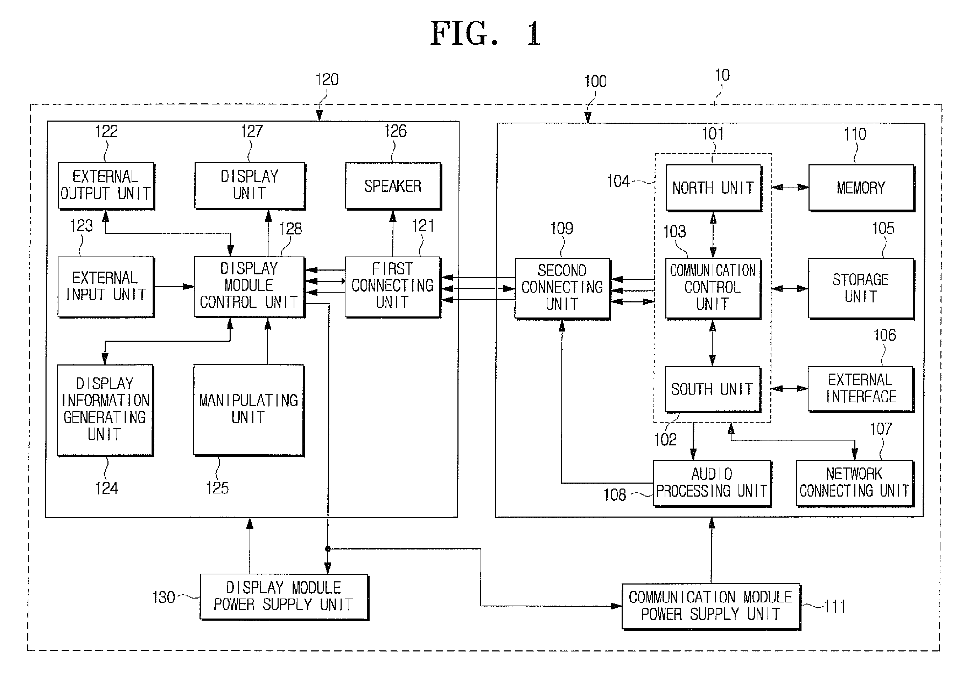

FIG. 1 is a block diagram illustrating the construction of a display apparatus according to an exemplary embodiment of the present invention.

Referring to FIG. 1, a display apparatus 10 comprises a communication module 100, a display module 120, a communication module power supply unit 111 and a display module power supply unit 130. The communication module 100 comprises a processing unit 104, a memory 110, a storage unit 105, an external interface 106, a network connecting unit 107, an audio processing unit 108 and a second connecting unit 109. The display module 120 comprises a first connecting unit 121, an external output unit 122, an external input unit 123, a display information generating unit 124, a manipulating unit 125, a speaker 126, a display unit 127 and a display module control unit 128.

The communication module 100 is capable of connecting to an external network such as the Internet via the network connecting unit 107, and executing simple programs such as web browsing programs.

The processing unit 104 handles data transmission and reception between the elements of the communication module 100, and comprises a north unit 101, a south unit 102 and a communication module control unit 103.

The north unit 101 connects relatively fast peripherals such as the communication module control unit 103 and the memory 110, and includes a graphic core such that the north unit 101 transmits an image signal to the display module 120 through a second connecting unit 109, after the image signal is processed.

The south unit 102 connects relatively slow peripherals such as the storage unit 105, the external interface 106, the network connecting unit 107 and the audio processing unit 108. More particularly, the south unit 102 connects to the Internet and transmits the received data to the communication module control unit 103.

The communication module control unit 103 controls the overall operation of the communication module 100.

The memory 110 provides a space to store data transmitted via the north unit 101, and may be implemented as a semiconductor memory device using an integrated circuit (IC).

The storage unit 105 is provided as a supplementary memory device, which operates to store data transmitted via the south unit 102. The storage unit 105 may be implemented as a magnetic memory device using magnetic recording, or an optical memory device using an optical disc, which generally have slow operation speeds.

The external interface 106 handles input or output of data and control signal to or from the external device, and may be connected with different devices, such as a keyboard, a mouse, a printer or USB.

The network connecting unit 107 connects physically to the external network through a LAN card and a connector RJ45. In particular, the network connecting unit 107 connects to the Internet and transmits and receives data.

The audio processing unit 108 generates an audio signal according to control transmitted from the south unit 102, and transmits the generated audio signal to the display module 120 through the second connecting unit 109.

The second connecting unit 109 transmits a video signal transmitted from the north unit 101, various other signals generated at the south unit 102, and an audio signal transmitted from the audio processing unit 108, through the first connecting unit 109 of the connected display module 120, and transmits a control signal transmitted from the first connecting unit 109 of the display module 120 to the south unit 102.

The display module 120 controls video display operation, and controls the operation of the communication module 100 according to the current status of the communication module 100.

The external output unit 122 transmits a video signal transmitted from the communication module 100 to an externally-connected device according to the selection by a user.

The external input unit 123 receives analog or digital video signal from an externally-connected device such as a PC or a VCR.

The display information generating unit 124 generates display information by combining text, figures or graphics corresponding to the information displayed, so that the generated display information is output through a screen, or overlapped on an image to be displayed on the screen.

The manipulating unit 125 comprises buttons to generate an input signal according to a command by a user. Accordingly, if a button is selected by a user, the manipulating unit 125 generates an input signal corresponding to the selected button, and the generated input signal is transmitted to the display module control unit 128 which will be explained below.

The speaker 126 outputs an audio signal transmitted from the communication module 100 and the external input unit 123.

The display unit 127 outputs a video signal transmitted from the communication module 100 and the external input unit 123.

The display module control unit 128 controls the overall operation of the display module 120. The display module control unit 128 particularly controls such that a video signal transmitted from the communication module 100 and the external input unit 123 is displayed, or transmitted to an external device through the external output unit 122. The display module control unit 128 particularly monitors the signal transmitted from the communication module 100 to determine whether the communication module 100 has an abnormality. The display module control unit 128 displays the determined status of the communication module 100, and transmits a control signal to the communication module 100 and the communication module power supply unit 111 to control the communication module 100 accordingly.

That is, the display module control unit 128 controls video display operation of the display module 120, and controls the operation of the communication module 100 according to the current status of the communication module 100. The display module control unit 128 determines the current status of the communication module 100 based on an output signal received from the communication module 100, and controls the operation of the communication module 100 according to the determined current status.

Upon a determination that the communication module 100 has an erroneous booting process, or that there is a communication error with the display module control unit 128, or that there is an erroneous video transmission to the display module 120, the display module control unit 128 causes the communication module 100 to reboot.

The display module control unit 128 controls the communication module power supply unit 111 to re-supply the power after the power cut-off, so that the communication module 100 is rebooted.

The process of the display module control unit 123 to determine the status of the communication module 100 according to the output signal from the communication module 100, will be explained in greater detail below.

First, whether the communication module 100 has an erroneous booting, is determined based on whether the output signal, indicative of whether the elements of the communication module 100 are normally operating, has a change in a logic level.

The display module control unit 128 determines whether the booting is in error, when the communication module 100 starts booting following the booting of the display module 120, according to the determination as to whether a "PCI_RESET" signal, indicative of whether the respective elements of the communication module 100 are booted successfully, is output at a HIGH logic level.

If an output signal, which is transmitted from the communication module 100 at a regular interval, is not received within a first threshold time, the display module control unit 128 determines that the communication of the communication module 100 is in error. That is, the display module control unit 128 determines that the communication of the communication module 100 is in error, if an output signal, output from the communication module 100 at a regular interval through I2C communication, is not received.

The display module control unit 128 also determines that the transmission of video is in error, if a video output signal is not received from the communication module 100 within a second threshold.

If the current status of the communication module 100 is determined to be in error, the display module control unit 128 controls the display information generating unit 124 such that the current status of the communication module 100 is indicated through the display unit 127 in the form of display information.

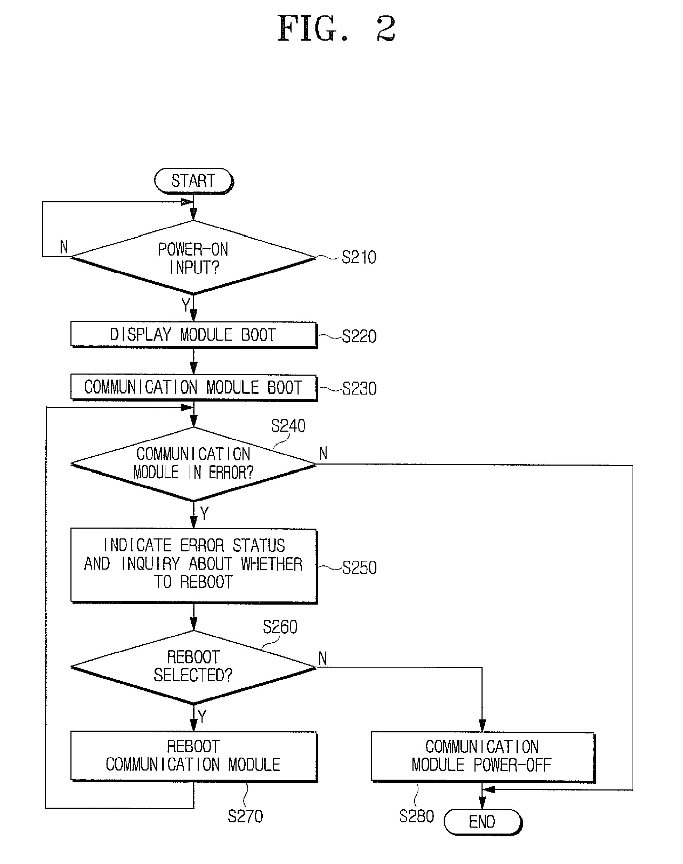

The control method of the display apparatus of FIG. 1 will be explained in detail below, with reference to FIG. 2 which illustrates a flowchart of a method for controlling the communication module 100 according to an exemplary embodiment of the present invention.

Referring to FIG. 2, first, the display module control unit 128 determines whether a user inputs a power-on command through the manipulating unit 125 (S210).

If a user inputs a power-on command at operation S201 (S201-Y), power is supplied to the display module 120 to boot the display module 120 (S220).

After completion of the booting of the display module 120, the display module control unit 128 controls the communication module power supply unit 111 to supply power to the communication module 100 so that the communication module 100 is booted (S230).

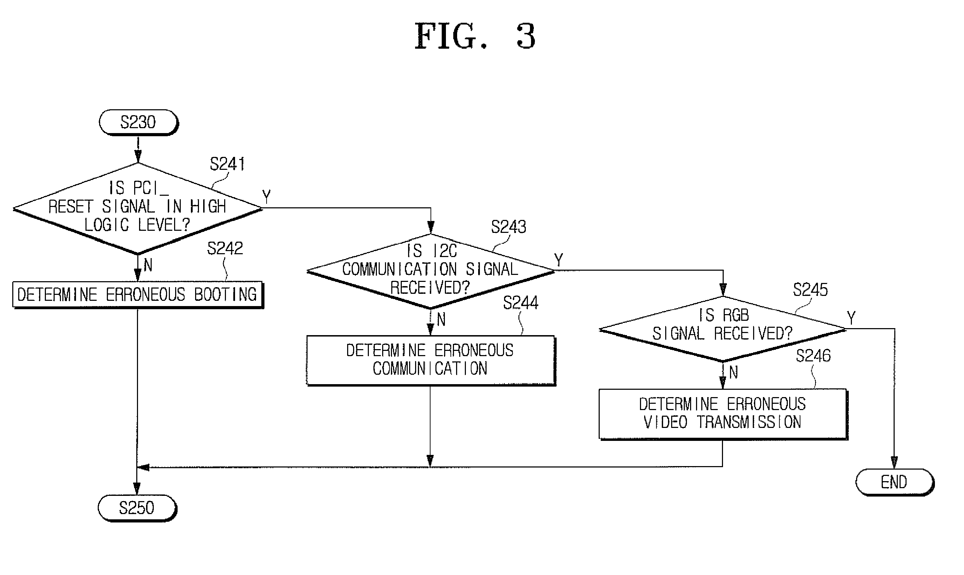

If the power is supplied to the communication module 100 at operation S230, the current status of the communication module 100 is determined and accordingly, it is determined whether the communication module 100 has an error (S240). The error of the communication module 100 may mainly include booting error, communication error with the display module control unit 128, and video transmission error with the display module 120. Identifying the type of error of the communication module 100 will be explained below with reference to FIG. 3.

If the communication module 100 is determined to have an error at operation S240 (S240-Y), the display module control unit 128 generates display information indicative of an error status and inquiring the desirability of a reboot so that the generated display information is displayed on the display unit 127 (S250).

The display module control unit 128 determines whether a user inputs a reboot selection through the manipulating unit 125 (S260).

If a user inputs a reboot selection at operation S260 (S260-Y), the display module control unit 128 controls the communication module power supply unit 111 to re-supply power to the communication module 100 after a certain period of power cutoff, and to accordingly reboot the communication module 100 (S270).

If a user does not input a reboot selection at operation S260 (S260-N), the display module control unit 128 controls the communication module power supply unit 111 to cut off power to the communication module 100, so that the communication module 100 is turned off (S280).

FIG. 3 is a flowchart illustrating the process of determining the types of error of the communication module 100 of FIG. 2.

The status of the communication module 100 is determined based on the output signal from the communication module 100, and this will be explained in detail below.

First, the display module control unit 128 determines whether the communication module 100 has an erroneous booting, based on whether the output signal, indicative of whether the elements of the communication module 100 are normally operating, has a change in a logic level (S241).

The display module control unit 128 determines whether the booting is in error, when the communication module 100 starts booting following the booting of the display module 120, according to the determination as to whether a "PCI_RESET" signal, indicative of whether the respective elements of the communication module 100 are booted successfully, is output at a HIGH logic level.

If a "PCI_RESET" signal is not output at a HIGH logic level (S241-N), the display module control unit 128 determines that the communication module 100 has an erroneous booting (S242).

The display module control unit 128 determines whether an output signal, which is transmitted from the communication module 100 at a regular interval, is received within a first threshold time (S243).

The display module control unit 128 determines that the communication of the communication module 100 is in error (S244), if an output signal, output from the communication module 100 at a regular interval through I2C communication, is not received (S243-N).

The display module control unit 128 also determines whether a video output signal is received from the communication module 100 within a second threshold (S245).

The display module control unit 128 determines that the transmission of video is in error (S246), if a video output signal is not received from the communication module 100 within a second threshold (S245-N).

Although some exemplary embodiments are explained above, it should be understood that the exemplary embodiments used herein are for illustrative purposes only, and should not be construed as limiting.

Accordingly, although the above exemplary embodiment employed the communication module power supply unit 111 and the display module power supply unit 130, separately, to supply power to the communication module 100 and the display module 120, this will not be construed as limiting. In appropriate cases, a common power supply may be employed to supply power to both the communication module power supply unit 111 and the display module power supply unit 130.

The above exemplary embodiments also set forth three types of errors, that is, a booting error, a communication error with the display module control unit 128, and video transmission error with the display module 120, as the information indicative of the current status of the communication module 100 and determinable based on the output signal from the communication module 100. However, one will understand that this is only for illustrative purposes, and other examples, such as a temporal delay or operation stop due to an error of the communication module 100, may also be applied. For example, an error such as communication problem due to a sudden communication interrupt at the network connecting unit 107 with the external network, may also be used.

Although the above exemplary embodiments controls the communication module power supply unit 111 to re-supply power to the communication module 100 after a predetermined interval of power cutoff, so that the communication module 100 can be turned off and then rebooted, this is also for the illustrative purpose. Alternatively, a control signal, indicative of an error type of the communication module 100, may be transmitted to the communication module control unit 103 to accordingly control the operation of the communication module 100.

The foregoing exemplary embodiments are merely exemplary and should not to be construed as limiting the present invention. The present teaching can be readily applied to other types of apparatuses. Also, the description of the exemplary embodiments of the present invention are intended to be illustrative, and not to limit the scope of the claims, and many alternatives, modifications, and variations will be apparent to those skilled in the art.

## Claims

1. A display apparatus comprising:
a communication module which performs communication with an external network;
a display module which displays a video on a display, wherein the video is received from one of an external device and the communication module; and
a display module control unit which controls a video display operation of the display module, and controls the communication module according to a status of the communication module.

2. The display apparatus of claim 1, wherein the display module control unit determines a status of the communication module based on an output signal from the communication module, and controls the communication module based on the determined status.

3. The display apparatus of claim 2, wherein the display module control unit causes the communication module to reboot, upon a determination that the status of the communication module indicates an error corresponding to one of an erroneous booting, an erroneous communication with the display module control unit, and an erroneous video transmission to the display module.

4. The display apparatus of claim 3 further comprising a communication module power supply unit which supplies power to the communication module, wherein the display module control unit controls the communication module power supply unit to re-supply power to the communication module after a predetermined time of power cutoff, so that the communication module is turned off and subsequently rebooted.

5. The display apparatus of claim 3, wherein the display module control unit determines whether the communication module has the error corresponding to the erroneous booting, according to whether the output signal, indicative of whether elements of the communication module operate normally, is changed on a logic level.

6. The display apparatus of claim 5, wherein the elements of the communication module comprise at least one of:
a south unit which controls a communication operation of the communication module;
a north unit which processes a video according to a video signal received from the external network;
a communication module control unit which controls an overall operation of the communication module and causes the output signal to be output to the display module;
a network connecting unit which is connected to the external network and communicates with the external network; and
a processing unit which controls data transmission between the south unit, the north unit, the communication module control unit and the network connecting unit.

7. The display apparatus of claim 3, wherein the display module control unit determines that the communication module has the error corresponding to the erroneous communication, if a regular interval output signal, received from the communication module at a regular interval, is not received within a threshold time.

8. The display apparatus of claim 3, wherein the display module control unit determines that the communication module has the error corresponding to the erroneous video transmission, if the output signal is not received from the communication module within a threshold time.

9. The display apparatus of claim 1, wherein the display module further comprises a display information generating unit which generates display information to be displayed on the display, wherein the display module control unit controls the display information generating unit such that the status of the communication module is indicated on the display according to the display information.

10. The display apparatus of claim 1 further comprising a communication module power supply unit which supplies power to the communication module, wherein the display module control unit controls the communication module power supply unit to supply power to the communication module, in response to a power-on command to the display apparatus.

11. A method for controlling a display apparatus including a communication module which performs communication with an external network, and a display module having a display, the method comprising:
displaying a video received from one of an external device and the communication module, on the display; and
controlling, by the display module, the communication module according to a status of the communication module.

12. The control method of claim 11, wherein the controlling comprises:
determining, by the display module, the status of the communication module based on an output signal from the communication module; and
controlling, by the display module, the communication module based on the determined status.

13. The control method of claim 11, wherein the controlling comprises causing the communication module to reboot, upon a determination that the status of the communication module indicates an error, wherein the error is one of an erroneous booting, an erroneous communication with the display module control unit, and an erroneous video transmission to the display module.

14. The control method of claim 13, wherein the controlling comprises re-supplying power to the communication module after a predetermined time of power cutoff, so that the communication module is turned off and subsequently rebooted.

15. The control method of claim 13, wherein the controlling comprises determining whether the communication module has the error corresponding to the erroneous booting, according to whether the output signal is changed on a logic level, wherein the output signal indicates whether the communication module is operating normally.

16. The control method of claim 13, wherein the controlling comprises determining that the communication module has the error corresponding to the erroneous communication, if a regular interval output signal received from the communication module at regular interval, is not received within a threshold time.

17. The control method of claim 13, wherein the controlling comprises determining that the communication module has the error corresponding to the erroneous video transmission, if the output signal is not received from the communication module within a threshold time.

18. The control method of claim 14 further comprising displaying the status of the communication module, upon the determination that the status of the communication module indicates the error.

19. The control method of claim 11 further comprising:
the communication module transmitting a video received from the external network to the display module.
